# EUROPEAN PATENT APPLICATION

(11) **EP 1 667 478 A1**
(43) Date of publication of application: **07.06.2006**
(21) Application number: 03818782.9
(22) Date of filing: 24.09.2003
(51) Int. Cl.: H04Q 7/34, H04Q 7/22, H04J 13/00

(54) **MOBILE STATION AND BASE STATION SEARCH METHOD**

(71) Applicant: MITSUBISHI DENKI KABUSHIKI KAISHA, Tokyo 100-8310 (JP)
(72) Inventor: AIKAWA, Hideto, c/o Mitsubishi Denki Kabushiki K., Tokyo 100-8310 (JP); SHIBUYA, Akihiro, c/o Mitsubishi Denki K. K., Tokyo 100-8310 (JP)
(74) Representative: Pfenning, Meinig & Partner GbR
(86) International application number: PCT/JP2003/012170
(87) International publication number: WO 2005/032184

(57) **Abstract**

In a mobile station according to the present invention, when this is present out of a service area and executes an initial cell search to intermittently search for a base station, for example, a Step 1 executing unit 23 executes, in the initial cell search, a cell search Step 1 to detect a reception level of a p-SCH (Primary Synchronization Channel) as a processing to detect a slot timing of a base station. In addition, a control unit 26 instructs for execution of a cell search Step 1 for each of the frequencies for which an initial cell search can be executed, in order, and when the reception level has exceeded a prescribed slot timing detecting threshold value, immediately instructs for execution of a cell search Step 2 without allowing executing a cell search Step 1 for other frequencies afterward. '

## Description

### TECHNICAL FIELD

The present invention relates to a mobile station used for mobile radio communications and, particularly, to a mobile station that searches for a base station to which it belongs when the mobile station is powered on or when the mobile station shifts into an out-of-service condition in which it cannot receive a radio wave from a base station and a base station searching method thereof.

### BACKGROUND ART

Hereinafter, a conventional mobile station and a base station searching method will be explained. Here, as an example of the conventional mobile station, a mobile station (CDMA portable telephone) that performs a base station search in an out-of-service condition is explained (see the following Patent Document 1).

The conventional mobile station monitors a change in the reception level when the mobile station shifts from an in-service condition to an out-of-service condition, and judges, as a result, if the change in the reception level is gradual, that the condition is an out-of-service reception involving no movement. In addition, as another judging method, a conventional mobile station monitors the position of a detected path, and judges, as a result, if the path position does not change, that it is an out-of-service reception involving no movement.

Then, in the conventional mobile station, when it is judged that the condition is an out-of-service reception involving no movement as in the above, reduction in power consumption is realized by reducing the cell search frequency. Also, at the time of an out-of-service reception involving no movement, cell search time is reduced by reducing the cell search frequency and by performing initial acquisition by use of a long code of a base station to which the mobile station had belonged before reaching an out-of-service condition.

On the other hand, when it is judged that the condition is an out-of-service reception resulting from a movement, the conventional mobile station reduces new mobile station search time by increasing the cell search frequency so as to realize an improvement in performance.

Patent Document 1: Japanese Published Unexamined Patent Application No. 2001-285178

In the conventional mobile station described in the document, a reception level monitor and detected path timing have been used for a condition to judge a shift from an in-service condition to an out-of-service condition, however, the judging method has involved several problems.

For example, with regard to a movement determination at the time of a shift to an out-of-service condition based on a reception level monitor value, when an instantaneous value of the reception level monitor value is used, it is difficult to distinguish whether the reception level is fluctuating owing to a fluctuation resulting from temporal phasing or if the reception level is fluctuating owing to a movement of the mobile station. In addition, when phasing is suppressed by averaging reception levels, it requires a certain extent of time to detect a change in the reception level.

In addition, with regard to a movement determination based on detected path timing, because switching among paths is frequent in a multi-path environment as in an urban area, a movement determination based on a path position is difficult.

Furthermore, when factors of a shift to an out-of-service condition are classified according to movements as in the above, for example, when the mobile station shifts to an out-of-service condition owing to a deterioration in the reception level resulting from shadowing or phasing despite having stood still, and then moves in the out-of-service condition, it takes time to return to an in-service condition.

As such, when cell search algorithms at the time of out-of-service reception are sorted out according to factors before a shift to an out-of-service condition, for example, there has been a problem in a conventional mobile station such that, when the out-of-service condition has changed, the mobile station fails to follow the same.

The present invention has been made in view of the above, and an object thereof is to provide a mobile station and a base station searching method that allows to efficiently perform an initial cell search even when the out-of-service condition has changed.

### DISCLOSURE OF INVENTION

According to the present invention, a mobile station that executes an initial cell search to intermittently search for a base station, while being present out of a service area, includes a Step 1 executing unit that executes, in an initial cell search, a cell search Step 1 to detect a reception level of a p-SCH (Primary Synchronization Channel) as a processing to detect a slot timing of a base station, and a control unit that controls execution of a cell search Step 1, wherein the control unit instructs execution of a cell search Step 1 for each frequency for which an initial cell search can be executed, in order, and when the reception level has exceeded a prescribed slot timing detecting threshold value, immediately instructs execution of a cell search 2 without allowing execution of a cell search Step 1 for other frequencies afterward.'

According to the present invention, a cell search Step 1 is executed, in order, for frequencies for which an initial cell search can be executed, and when a p-SCH reception level has exceeded the predetermined threshold value, without executing a cell search Step 1 for other frequencies, for example, a cell search Step 2, a cell search Step 3, a pass search, and frequency acquisition are executed in order.

### BRIEF DESCRIPTION OF DRAWINGS

Fig. 1 is a view of a configuration example of a mobile communications system including mobile stations according to the present invention;
Fig. 2 is a diagram of a configuration of a mobile station that realizes a base station searching method according to the present invention;
Fig. 3 is a flowchart of processes of a control unit that controls the base station searching method according to the present invention;
Fig. 4 is a chart of an example when a pipeline processing is executed in Step 1, Step 2, and Step 3; and
Fig. 5 is a chart of an example when a pipeline processing is not executed in Step 1, Step 2, and Step 3.

### BEST MODE(S) FOR CARRYING OUT THE INVENTION

Exemplary embodiments of the present invention will be explained below with reference to the accompanying drawings.

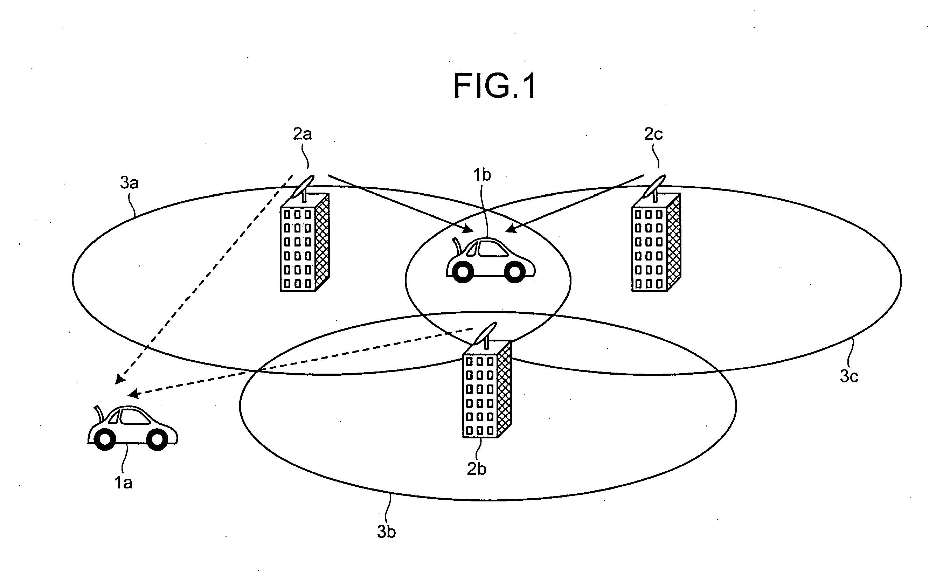

Fig. 1 is a view of a configuration example of a mobile communications system including mobile stations according to the present invention, which expresses a condition when the mobile stations are present out of a service area and within a service area. This system includes a mobile station 1a, a mobile station 1b, and base stations 2a, 2b, and 2c, and the base stations 2a, 2b, and 2c cover radio areas 3a, 3b, and 3c, respectively.

Also, as shown in Fig. 1, because the mobile station 1a does not belong to any base station, it is executing an initial cell search to intermittently search for a base station. In the initial cell search, a process to identify a frame timing and long code of a base station is performed. The mobile station 1b belongs to the base station 2a, and a condition where reception is possible at the base station 2c as well is shown.

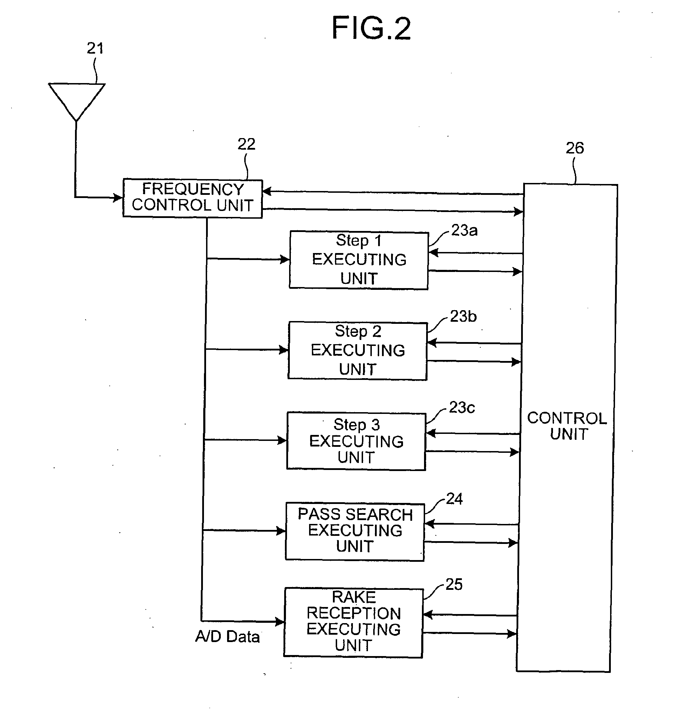

Fig. 2 is a diagram of a configuration of the mobile station (1a, 1b) that realizes a base station searching method according to the present invention. The mobile station includes an antenna 21, a frequency control unit 22 that demodulates a signal received by the antenna 21 to a base band signal and executes AGC (Auto Gain Control) to convert the same to an appropriate reception level, a Step 1 executing unit 23a that executes a cell search Step 1 to detect a slot timing of a base station, a Step 2 executing unit 23b that executes a cell search Step 2 to detect a frame timing of a base station, a Step 3 executing unit 23c that executes a cell search Step 3 to identify a long code of a base station, a path search executing unit 24 that detects a reception timing and reception level of a direct wave that arrives directly from a base station or a multi-path wave that arrives as a result of reflection of a receiving wave in a plurality of features, a RAKE reception executing unit 25 that demodulates physical channel signals transmitted from a desired base station, and a control unit 26 that controls the frequency control unit 22, the Step 1 executing unit 23a, the Step 2 executing unit 23b, the Step 3 executing unit 23c, the path search executing unit 24, and the RAKE reception executing unit 25.

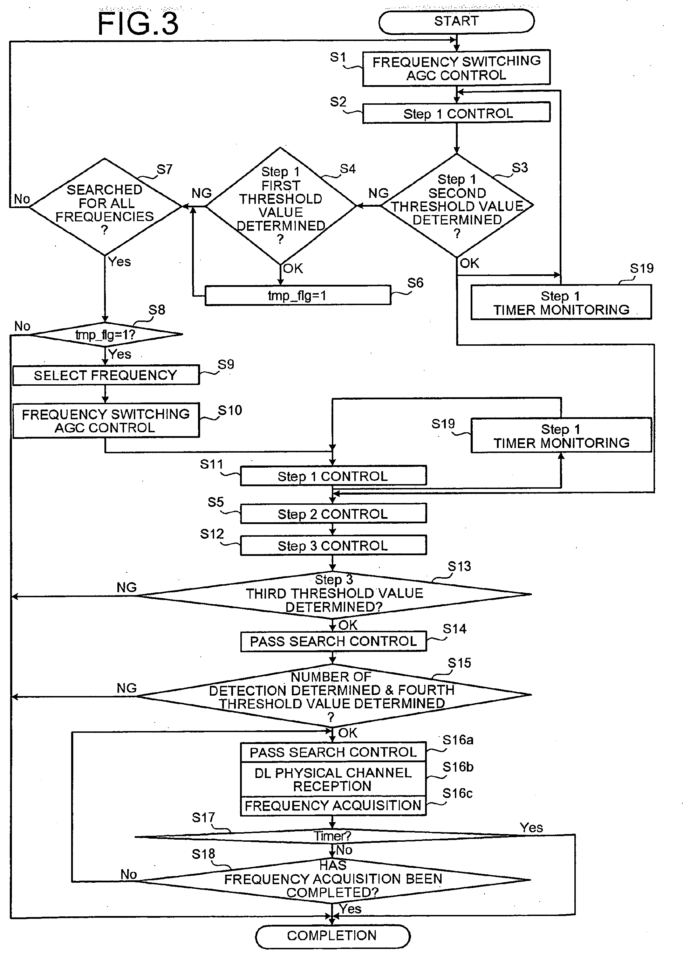

Here, a base station searching method according to the present invention will be explained in detail by use of a drawing. Fig. 3 is a flowchart of processes of the control unit 26 that controls a base station searching method according to the present invention. As shown in Fig. 3, an initial cell search is executed for a plurality of frequencies. For example, when an initial cell search is executed for a frequency f1, a frequency f2, and a frequency f3, the frequencies are set in order of frequency numbers, in order of frequency numbers used in the past, or in random order so as to execute an initial cell search. Here, as an example, an initial cell search executed in order of frequency number will be explained.

First, the control unit 26 instructs the frequency control unit 22 to switch frequency to the frequency f1 and execute AGC control (step S1). When the frequency has been set to the frequency f1 and control has been executed by the frequency control unit 22, the frequency control unit 26 next instructs the Step 1 executing unit 23a to execute a cell search Step 1 (step S2). Then, when execution of Step 1 has ended in the Step 1 executing unit 23a, the control unit 26 next determines a reception level of a p-SCH (Primary Synchronization Channel) detected by the Step 1 executing unit 23a by use of predetermined threshold values (first threshold value and second threshold value: first threshold value<second threshold value) (steps S3 and S4). For example, when the p-SCH reception level is greater than the second threshold value (step S3, OK), the control unit 26 instructs the Step 2 executing unit 23b to execute a cell search Step 2 (step S5).

As such, in the present embodiment, when the p-SCH reception level exceeds the second threshold value, without executing Step 1 for other frequencies (f2 and f3), the control unit 26 immediately shifts to Step 2. Thereby, initial cell search time can be reduced.

On the other hand, when the p-SCH reception level has not exceeded the second threshold value (step S3, NG), without shifting to Step 2, the control unit 26 performs a determination based on the first threshold value (step S4). Then, when the p-SCH reception level is greater than the first threshold value (step S4, OK), a flag (tmp_flg) is displayed (step S6), and when the p-SCH reception level is smaller than the first threshold value, no flag (tmp_flg) is displayed.

In the above, a p-SCH reception level has been used for the determining process based on the first threshold value and second threshold value, however, without limitation hereto, for example, a ratio of a signal power to a noise power typified by Ec/Io may be used, or both the ratio of the respective powers and reception level may be used.

Next, after executing the determining process based on the first threshold value as step S4, the control unit 26 determines as to whether Step 1 has been executed for all frequencies (f1 to f3) (step S7). Then, when Step 1 has not been executed for all frequencies (step S7, No), the control unit 26 instructs the frequency control unit 22 to switch the frequency to a frequency for which Step 1 has not been executed and execute AGC calculation (step S1), and repeatedly executes Step 1 until a reception level resulting from Step 1 exceeds the second threshold value (step S3, OK) or until Step 1 for all frequencies is completed (step S7, Yes).

As such, in the present embodiment, when a p-SCH power level obtained as a result of Step 1 is smaller than the second threshold value, the process shifts to another frequency for which Step 1 has not been executed. Thereby, an initial cell search can be efficiently carried out. Here, the "all frequencies" mean frequencies for which the control unit 26 can execute an initial cell search and do not mean that an initial cell search is executed for all frequencies that the mobile station can use.

Moreover, with regard to a frequency that has already been searched in an out-of-service condition, by setting the first threshold value higher, a careless execution of Step 2 and Step 3 is eliminated, therefore, power consumption can be reduced. Also, when a threshold value determination in Step 3 to be described later is "NG," when a path detection result is "NG," or when a time-out easily occurs in Step 17 to be described later, by setting the first threshold value and the second threshold value higher, a careless execution of Step 2 and Step 3 is eliminated, therefore, power consumption can be reduced.

Next, when Step 1 for all frequencies has been completed by the process of step S7, the control unit 26 searches whether frequencies for which flags (tmp_flg) have been displayed, namely, frequencies whose p-SCH reception levels have exceeded the first threshold value are included in frequencies searched in the past (step S8). As a result, when the p-SCH reception level has not exceeded the first threshold value at any frequency (step S8, No), the control unit 26 ends the initial cell search and waits for a next initial cell search.

When frequencies whose p-SCH reception levels have exceeded the first threshold value are present (step S8, Yes), the control unit 26 selects a frequency set for the last time among the frequencies for which flags (tmp_flg) have been displayed (step S9). Here, the selecting process may be carried out in order of frequency numbers, based on p-SCH reception levels. As such, in the present invention, when there is no frequency that exceeds the second threshold value, an initial cell search is executed only for a single frequency that exceeds the first threshold value. Thereby, unnecessary initial cell search executing time can be reduced.

Next, after executing the selecting process in step 9, the control unit 26 instructs the frequency control unit 22 to switch frequency to the selected frequency and execute AGC control (step S10). When the frequency has been set and AGC control has been executed by the frequency control unit 22, the frequency control unit 26 next instructs the Step 1 executing unit 23a to execute a cell search Step 1 (step S11). Then, when execution of Step 1 has ended in the Step 1 executing unit 23a, the frequency control unit 26 next instructs the Step 2 executing unit 23b to execute a cell search Step 2 (step S5).

Next, after executing Step 3 by step S5, the control unit 26 instructs the Step 3 executing unit 23c to instruct a cell search Step 3 (step S12). Then, after execution of Step 3 is completed, the control unit 26 determines as to whether a reception level of a CPICH (Common Pilot Channel) detected by the Step 3 executing unit 23c has exceeded a prescribed third threshold value (step S13). For example, when it has exceeded (step S13, OK), the control unit 26 instructs the path search executing unit 24 to execute a path search (step S14). On the other hand, when the CPICH reception level has not exceeded the third threshold value (step S13, NG), the control unit 26 stops the initial cell search and waits for a next initial cell search.

Next, when there is a detected path as a result of the path detection by step S14 and a detected CPICH reception level has exceeded a fourth threshold value (step S15, OK), the control unit 26 continues instructing the path search executing unit 24 to execute a path search (step S16a), instructs the RAKE reception executing unit 25 on a DL (downlink) physical channel reception (step S16b), and controls frequency acquisition (step S16c). On the other hand, when there is no detected path as a result of the path detection by step S14 (step S15, NG), the control unit 26 stops the initial cell search and waits for a next initial cell search.

Thereafter, the control unit 26 monitors frequency acquisition time, and, when a time-out occurs (step S17), stops the initial cell search. On the other hand, when no time-out has occurred (step S17, No), the control unit 26 determines as to whether frequency acquisition has been completed (step S18), if frequency acquisition has been completed (step S19, Yes), it ends the initial cell search, and if not (step S18, No), it continues controlling frequency acquisition.

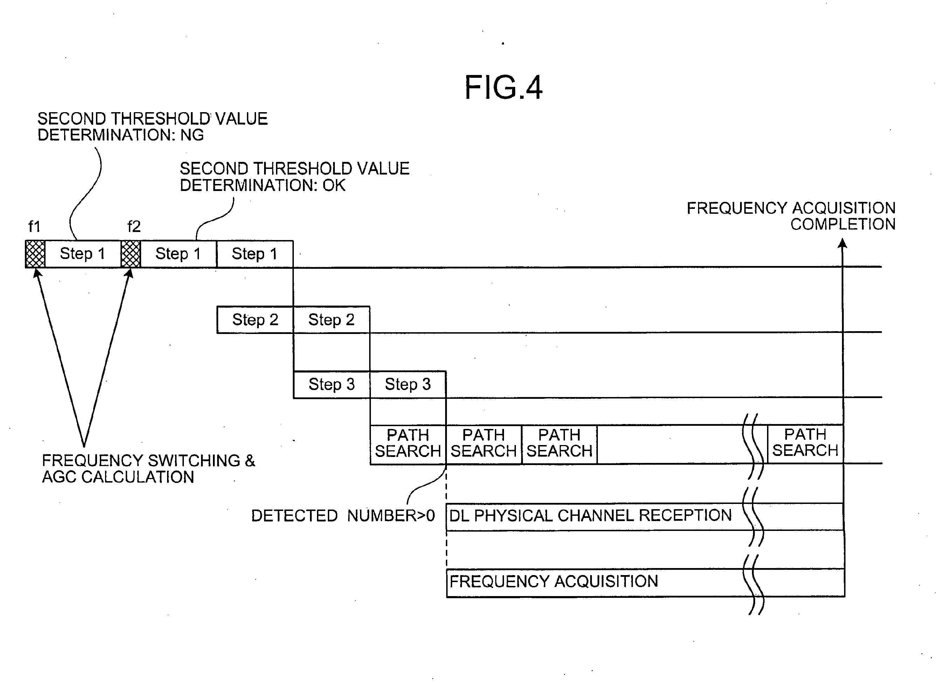

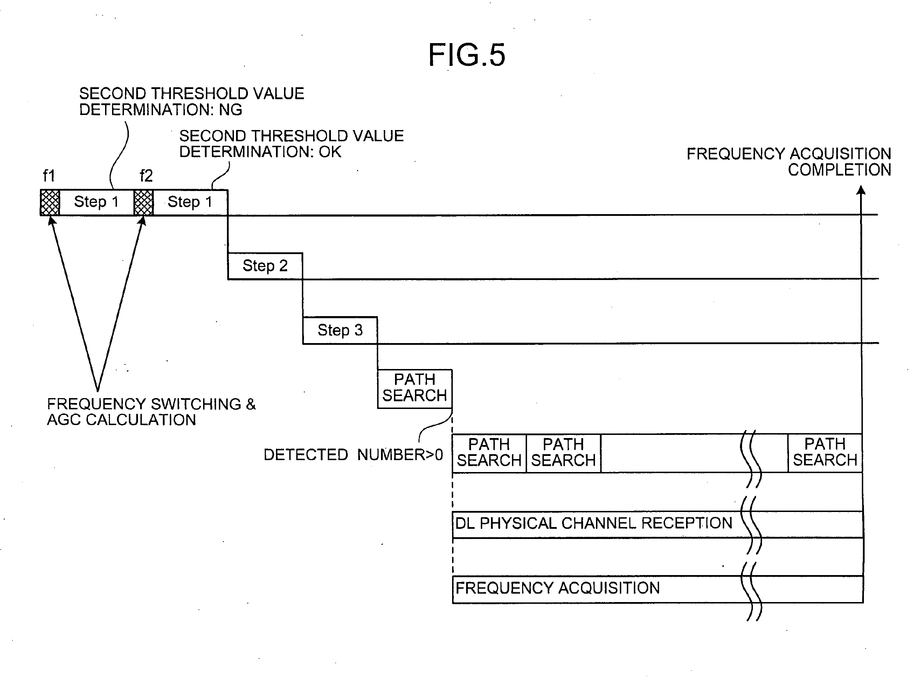

The control unit 26 judges as to whether execution time of Step 1 is within a timer value (step S19), and if within a timer value, again executes Step 1. Thereby, as shown in Fig. 4, it becomes possible to execute a pipeline processing in Step 1, Step 2, and Step 3, and detection accuracy of Step 1 is improved. In addition, as shown in Fig. 5, by setting a small timer value or by not executing a pipeline processing, initial cell search execution time can be reduced.

As in the above, according to the present embodiment, Step 1 is executed, in order, for frequencies for which an initial cell search can be executed, and when a p-SCH reception level has exceeded a prescribed predetermined threshold value, without executing Step 1 for other frequencies, the subsequent Step 2, Step 3, pass search, and frequency acquisition are executed. Thereby, even when the out-of-service condition has changed, an initial cell search can be efficiently carried out.

Although an initial cell search that is executed by a mobile station 1a that is present out of a service area to intermittently search for a base station has been explained in the present invention, a base station searching method according to the present invention can be similarly applied to a case of power-on as well.

### INDUSTRIAL APPLICABILITY

As in the above, a base station searching method according to the present invention is of use for a mobile station that performs an initial cell search when the mobile station is powered on or when the mobile station shifts into an out-of-service condition where it cannot receive a radio wave from a base station and is, particularly, suitable for a mobile station that performs an initial cell search when the out-of-service condition has changed owing to a movement.

## Claims

1. A mobile station that executes an initial cell search to intermittently search for a base station, while being present out of a service area, comprising:
a Step 1 executing unit that executes, in an initial cell search, a cell search Step 1 to detect a reception level of a p-SCH (Primary Synchronization Channel) as a processing to detect a slot timing of a base station; and
a control unit that controls execution of a cell search Step 1, wherein
the control unit instructs execution of a cell search Step 1 for each frequency for which an initial cell search can be executed, in order, and when the reception level has exceeded a prescribed slot timing detecting threshold value, immediately instructs execution of a cell search Step 2 without allowing execution of a cell search Step 1 for other frequencies afterward.

2. The mobile station according to claim 1, wherein
the control unit changes the slot timing detecting threshold value depending on a situation.

3. The mobile station according to claim 1, wherein
when the reception level did not exceed the slot timing detecting threshold value,
the control unit further records results of a determination based on a predetermined reference threshold value (reference threshold value<slot timing detecting threshold value), and then
repeatedly executes a cell search Step 1 until a reception level after execution of a cell search Step 1 for other frequencies exceeds the reference threshold value or until a cell search Step 1 for all frequencies for which an initial cell search can be executed is completed.

4. The mobile station according to claim 3, wherein
the control unit changes the reference threshold value depending on a situation.

5. The mobile station according to claim 3, wherein
when one or a plurality of p-SCH reception levels above the reference threshold value are present as a result of completion of the cell search Step 1 for all frequencies, the control unit selects a frequency corresponding to any one thereof,
further, again instructs for execution of a cell search Step 1 for the selected frequency, and then
immediately instructs for execution of a cell search Step 2.

6. The mobile station according to claim 1 that can be applied to an initial cell search in a case of power-on as well.

7. A base station searching method when a mobile station is present out of a service area and executes an initial cell search to intermittently search for a base station, comprising:
a Step 1 executing step of executing, as a process to detect a slot timing of a base station, a cell search Step 1 to detect a reception level of a p-SCH (Primary Synchronization Channel) for each of the frequencies for which an initial cell search can be executed, in order; and
a slot timing determining step of determining as to whether the reception level has exceeded a prescribed slot timing detecting threshold value and, when this has exceeded, immediately shifting to a cell search Step 2 process without executing a cell search Step 1 for other frequencies afterward.

8. The base station searching method according to claim 7, further comprising:
a determination result recording step of recording, when a reception level did not exceed the slot timing detecting threshold value in the determining process, results of a determination of a predetermined reference threshold value (reference threshold value<slot timing detecting threshold value), wherein
in the determination result recording step, the judgement results are recorded until a reception level after execution of a cell search Step 1 for other frequencies exceeds the reference threshold value or until a cell search Step 1 for all frequencies for which an initial cell search can be executed is completed.

9. The base station searching method according to claim 8, further comprising:
a frequency selecting step of selecting, when one or a plurality of p-SCH reception levels above the reference threshold value are present as a result of completion of the cell search Step 1 for all frequencies, a frequency corresponding to any one thereof, wherein
a cell search Step 1 for the selected frequency is executed, and then a cell search Step 2 is immediately executed.
